# EUROPÄISCHE PATENTSCHRIFT

(11) **EP 2 435 160 B1**
(45) Veröffentlichungstag und Bekanntmachung des Hinweises auf die Patenterteilung: **16.05.2018**
(21) Anmeldenummer: 10710205.5
(22) Anmeldetag: 12.03.2010
(51) Int. Cl.: B01D 53/00, B01D 53/26, B60T 17/00

(54) **VERFAHREN ZUR AUFBEREITUNG VON DRUCKLUFT, DRUCKLUFTAUFBEREITUNGSEINRICHTUNG SOWIE KRAFTFAHRZEUG MIT DERARTIGER EINRICHTUNG**
PROCESS FOR PURIFYING COMPRESSED AIR, COMPRESSED AIR PURIFICATION APPARATUS AND MOTOR VEHICLE HAVING SUCH AN APPARATUS
PROCÉDÉ DE TRAITEMENT D'AIR COMPRIMÉ, DISPOSITIF DE TRAITEMENT D'AIR COMPRIMÉ ET VÉHICULE AUTOMOBILE ÉQUIPÉ DUDIT DISPOSITIF

(30) Priorität: 28.05.2009 DE 102009023044
(43) Veröffentlichungstag der Anmeldung: 04.04.2012
(73) Patentinhaber: WABCO GmbH, 30453 Hannover (DE)
(72) Erfinder: PENDZICH, Kevin, 30161 Hannover (DE); DIEKMEYER, Heinrich, 30890 Barsinghausen (DE)
(74) Vertreter: Krause, Martin
(86) Internationale Anmeldenummer: PCT/EP2010/001560
(87) Internationale Veröffentlichungsnummer: WO 2010/136090

(56) Entgegenhaltungen:
- EP-A2- 0 504 596
- AT-B- 394 167
- DE-A1- 4 313 573
- DE-A1-102004 056 954
- JP-A- 2000 073 978
- US-A1- 2007 028 777

## Beschreibung

Die Erfindung betrifft ein Verfahren zur Aufbereitung von Druckluft für einen oder mehrere pneumatischen Verbraucher der im Oberbegriff des Patentanspruchs 1 angegebenen Art, eine Druckluftaufbereitungseinrichtung gemäß dem Oberbegriff des Patentanspruchs 6 sowie ein Kraftfahrzeug mit einer derartigen Druckluftaufbereitungseinrichtung.

Zur Versorgung von pneumatischen Verbrauchern wie Druckluftbremsen von Kraftfahrzeugen mit Druckluft sind Druckluftversorgungseinrichtungen bekannt, deren Kompressor Ansaugluft komprimiert und über eine Druckleitung einem Speicherbehälter zur bedarfsweisen Entnahme zuführt. Bei der Anwendung in Kraftfahrzeugen ist die Feuchtigkeit der Druckluft unerwünscht. Aus der DE 10 2006 035 772 A1 ist eine Druckluftaufbereitungseinrichtung für Kraftfahrzeuge bekannt, welche in der Druckleitung eine Entfeuchtungseinrichtung vorsieht, so dass die Druckluft vor dem Einlass in den Speicherbehälter getrocknet wird.

Die Druckluft ist aber auch oft mit schädlichen Bestandteilen der Ansaugluft sowie Ölprodukten und Ölzerfallsprodukten aus dem Verdichtungsprozess des - üblicherweise mit Öl geschmierten - Kompressors verunreinigt. Diese - zusätzlich zum Wasser in der Druckluft befindlichen - Verunreinigungen werden im folgenden der Einfachheit halber als Ölprodukte bezeichnet. Ein großer Teil der Ölprodukte liegt als Aerosol vor, welches sich mit der Druckluft mit bewegt und damit in das gesamte Druckluftsystem gelangen kann. Dort können sie zu Beschädigungen führen, beispielsweise durch Quellen, Kleben oder Zersetzen von Dichtungselementen. Um die Drucklufteinrichtung und die an sie angeschlossenen Druckluftgeräte vor Verschmutzung mit Ölprodukten zu schützen, wird im Allgemeinen die Druckluft in der Druckleitung von Ölprodukten gereinigt.

Es wurden dabei schon Lösungen zur Aufbereitung der Druckluft vorgeschlagen, bei denen die Ölreinigung vor der Trocknung erfolgt. Bekannt ist dabei, als Einrichtung zur Ölreinigung einen separaten Filter anzuordnen, beispielsweise einen Koaleszenzfilter oder einen Ölabscheider. Jedoch erweist sich dabei als nachteilig, dass abgeschiedene Ölprodukte in die Umwelt entlüftet werden. Ölabscheider nach dem Zyklonprinzip scheiden nur Aerosole bestimmter Größe ab und ermöglichen somit in vielen Anwendungsfällen keine hinreichende Reinigungsleistung. Insbesondere aber führt das Filtern der Druckluft vor dem Durchströmen des Trockners dazu, dass die Einrichtung zur Ölreinigung sowohl mit Ölprodukten als auch mit Wasser beaufschlagt wird. Das Filterelement scheidet somit eine erhebliche Flüssigkeitsmenge als Gemisch aus Öl und Wasser ab, das in erheblichen Mengen zu entsorgen ist, was wiederum eine häufige Wartung des Filters bedingt und unter Umständen dessen Funktion verschlechtert.

Es wurde auch schon vorgeschlagen, die Ölreinigung erst hinter dem Trocknungsmittel durchzuführen. Die DE 103 135 75 A1 offenbart eine Kartuscheeinrichtung für einen Lufttrockner, bei dem das Mittel zur Entfernung von schädlichen chemischen Verbindungen, insbesondere Kohlenstoffverbindungen, in Strömungsrichtung der Luft dem Trocknungsmittel nachgeordnet ist. Die Filtration erst hinter dem Trocknungsmittel führt jedoch regelmäßig zu einer überhöhten Verschmutzung des Trockenmittels, was die Trocknungsleistung merklich herabsetzt.

Eine weitere Druckluftaufbereitungseinrichtung des Standes der Technik wird in der AT 394167 B offenbart. Der Erfindung liegt die Aufgabe zugrunde, eine Druckluftaufbereitungseinrichtung und ein Verfahren zur Erzeugung von Druckluft für einen pneumatischen Verbraucher zu schaffen, welche eine effektive Reinigung der Druckluft von Ölprodukten und Wasserdampf gewährleisten ohne dass abgeschiedene Ölprodukte in die Umwelt entlüftet werden und welche bei Kraftfahrzeugen mit einfachen Mitteln anwendbar sind.
Diese Aufgabe wird erfindungsgemäß durch ein Verfahren mit den Merkmalen des Patentanspruchs 1, durch eine Druckluftaufbereitungseinrichtung mit den Merkmalen des Patentanspruchs 5 sowie durch ein Kraftfahrzeug mit den Merkmalen des Patentanspruchs 10 gelöst.

Erfindungsgemäß ist bei einer Aufbereitung der Druckluft mit einer Reinigung von Ölprodukten in einem ersten Schritt und einer anschließenden Trocknung vorgesehen, die Druckluft vor der Ölreinigung auf eine derartige Temperatur zu bringen, dass die Kohlenwasserstoffverbindungen kondensieren und die in der Druckluft enthaltene Wassermasse als Dampf gelöst ist. Die Ölreinigung der Druckluft durch Filtration erfolgt dabei bei einer solchen gewählten Temperatur, zu der die Ölprodukte vollständig kondensiert und somit als Aerosole oder in flüssiger Form vorliegen, welche leicht gefiltert werden können, während das Wasser noch als Wasserdampf in der Druckluft gelöst ist und den Filter passiert. Der Wasserdampf kann dann bei der anschließenden Trocknung mit einfachen Mitteln effektiv aus der Druckluft entfernt werden.

Die Temperatur ist so hoch zu wählen, dass die Feuchtigkeit der Druckluft der Druckluftversorgungsanlage unter Berücksichtigung der Umgebungsbedingungen und der jeweiligen Verdichtung noch als Wasserdampf in der Druckluft gelöst bleibt. Die Temperatur ist andererseits so niedrig zu wählen, dass die Ölprodukte vollständig bzw. nahezu vollständig kondensiert sind. Als vorteilhafte Temperaturwerte werden bei einer Umgebungstemperatur von beispielsweise -40°C eine Eingangstemperatur bei der Ölreinigung von -15°C gesehen. Bei einer Umgebungstemperatur 20°C kann die Eingangstemperatur vorteilhaft 70° C betragen, bei einer Umgebungstemperatur von 40°C bspw. 100°C. Die Druckleitung und die in ihr ggf. angeordneten Einrichtungen und Aggregate werden derart aufeinander abgestimmt, dass am Eingang der Aufbereitungseinrichtung, also in Durchströmungsrichtung vor der Einrichtung zum Entfernen von Ölprodukten, die erfindungsgemäß vorgesehene Temperatur in der Druckluft vorliegt, bei der Öl kondensiert und die Wasserfracht als Dampf gelöst bleibt.

Bei der erfindungsgemäßen Abscheidung bzw. Ausfilterung von Öl und der unabhängig davon erfolgenden Wassertrennung liegt nur eine geringere Menge von Ölprodukten vor, welche leichter handhabbar bzw. einfacher zu entsorgen ist. Das im Allgemeinen in größeren Mengen abgeschiedene Wasser ist sauber und kann in die Umwelt entlüftet werden. Darüber hinaus wird durch die erfindungsgemäße Aufbereitung der Trockner bzw. das in dem Trockner vorgehaltene Trocknungsmittel zuverlässig geschützt. Wird die Trocknungseinheit als Kartusche mit darin vorgehaltenem Trocknungsmittel ausgebildet, so ist der Wartungsturnus der Kartusche erheblich verlängert bzw. muss die Kartusche gar nicht ausgewechselt werden. Da die erfindungsgemäße Aufbereitung der Druckluft äußert effizient hinsichtlich der Ölabtrennung ist, kann auf eine Grobfiltration in der Trocknungsmittelkartusche ganz verzichtet werden, so dass einfacher ausgebildete Bauteile für eine vollständige Aufbereitung ausreichend sind. Des Weiteren kann mit der erfindungsgemäßen Reinigung der Druckluft von Öl die Ölfracht vollständig aufgefangen und entsorgt werden, so dass keine Ölprodukte in die Umwelt gelangen. Auf diese Weise wird den zunehmenden Anforderungen des Umweltschutzes an Kraftfahrzeuge Rechnung getragen.

Mit einfachen Mitteln kann das erfindungsgemäßen Temperaturniveau, das zur Kondensation allein der Öl-Aerosole führt, unter Berücksichtigung der Kompressor-Charakteristik und der Verdichtung durch die Gestaltung der Druckleitung 4 eingestellt werden. Hierzu wird die Leitungslänge, der Leitungsquerschnitts, die Wärmeleitfähigkeit und -kapazität der Druckleitung entsprechend gewählt und ihr Verlauf bei der Verlegung im Fahrzeug so gewählt, dass die Druckleitung die gewünschte Temperatur der Druckluft erzeugt.

Vorteilhaft ist in dem Abschnitt der Druckleitung, der in Durchströmungsrichtung vor der Einrichtung zum Entfernen von Öl liegt, eine auf die Temperatur der Druckluft einwirkende Einrichtung angeordnet. Durch Einsatz dieser Einrichtung wird die Temperatur am Eingang der Filtereinheit auf das erfindungsgemäße Niveau eingestellt, bei dem die Ölprodukte als Aerosole vorliegen und der Wasserdampf in der Druckluft gelöst bleibt. Da die Druckluft bei Verdichtung durch einen Kompressor aufgewärmt wird, ist diese auf die Temperatur der Druckluft einwirkende Einheit ein Kühler, der die Druckluft auf das erfindungsgemäße Niveau einstellt. Hierzu wird in einer besonders vorteilhaften Ausgestaltung der Erfindung eine Steuer- oder Reglereinheit vorgesehen, welche zur Regelung bzw. Steuerung der Temperatur den Kühler als Stellglied ansteuert.

In einer vorteilhaften Ausführungsform der Erfindung wird die Druckluft zusätzlich nach der Reinigung gekühlt, damit die nachfolgende Trocknung effektiv erfolgen kann. Zum einen kondensiert bei diesem Abkühlvorgang Wasser und kann als Flüssigkeit direkt entlüftet werden. Zum anderen ist der weitere Trocknungsvorgang (Reduzierung des Taupunktes) umso effektiver je niedriger die Temperatur ist, bei der er erfolgt. Wird bei einer Umgebungstemperatur, die deutlich über dem Gefrierpunkt liegt, die Eingangstemperatur möglichst nah an die Umgebungstemperatur abgesenkt, während bei einer niedrigeren Umgebungstemperatur eine Eingangstemperatur von 25 ... 30 K über Umgebungstemperatur zweckmäßig ist, so wird verhindert, dass der Trockner durch Bildung von Eis einfriert.

Die Reinigung der Druckluft von Öl erfolgt vorteilhaft durch Filtration, wobei jedoch alternativ auch andere Aufbereitungstechniken eingesetzt werden können, beispielsweise die Anordnung eines Ölabscheiders. Als Filter kann vorteilhaft ein Koaleszenzfilter eingesetzt werden, der eine kostengünstige Filtermöglichkeit bietet. Der Koaleszenzfilter kann zweckmäßig Teil einer Luftbereitungseinheit (APU = Air Processing Unit) sein, so dass ein kompaktes Bauteil vorliegt, in das auch die Trocknungseinheit und ggf. weitere Bauteile entsprechend dem Leistungsangebot der APU integriert sind. Die APU stellt eine Kombination der Ölreinigung und dem Trockner sowie der dazugehörigen Kühlung in einem kompakten Gehäuse dar, so dass die Anzahl der Komponenten der Druckversorgungseinrichtung deutlich reduziert wird. Die kompakte Bauweise kommt den zunehmenden Erfordernissen bei einem Einsatz in Kraftfahrzeugen entgegen, wo regelmäßig nur sehr geringer Bauraum zur Aufnahme der Einrichtungen zur Versorgung mit Druckluft zur Verfügung steht. Darüber hinaus ist durch die reduzierte Anzahl an Bauteilen in der Air Processing Unit eine einfache und schnelle Installation möglich.

Die Effizienz der erfindungsgemäßen Trennung von Ölreinigung der Druckluft und anschließender Wasserabscheidung ermöglicht den Einsatz von Bauteilen, die im Vergleich zu den herkömmlich eingesetzten Aggregaten einfach gebaut sein und allein auf ihren jeweiligen Einsatzzweck ausgelegt werden können.

Eine Ausbildung des Ölfilters als Kartusche hat neben der leichten Handhabbarkeit und Installation den Vorteil, dass turnusmäßig allein der Ölfilter zu wechseln ist.

In einer weiteren vorteilhaften Ausführungsform der Erfindung befindet sich in der Druckleitung zwischen Filtereinheit und Trocknungseinheit ein Absperrventil, welches dazu dient, den Abschnitt vom Kompressor bis zum Absperrventil unter Druck zu halten, wenn der Lufttrockner der Trocknungseinheit zur Regeneration des Trockenmittels entlüftet wird. Hierdurch wird zum einen verhindert, dass beim Entlüftungsvorgang durch die dann auftretenden hohen Strömungsgeschwindigkeiten Verunreinigungen aus der Filtereinheit, das heißt dem Ölfilter oder Ölabscheider, in den folgenden Leitungsabschnitt mitgerissen werden. Zum anderen wird bei einer Regeneration der Druck an der Filtereinheit aufrecht erhalten und dadurch Energie zur Wiederherstellung des Druckniveaus nach der Regeneration eingespart. Das Absperrventil kann von einer elektronischen Luftaufbereitung fremdgesteuert sein oder auch selbststeuernd sein.

Ausführungsbeispiele der Erfindung sind nachstehend anhand der Zeichnung näher erläutert. Es zeigen:
- Fig. 1: ein fluidtechnisches Schaubild einer Druckluftaufbereitungseinrichtung,
- Fig. 2: ein fluidtechnisches Schaubild einer alternativen Ausgestaltung einer Druckluftaufbereitungseinrichtung,
- Fig. 3: ein fluidtechnisches Schaubild einer weiteren erfindungsgemäßen Ausgestaltung einer Druckluftaufbereitungseinrichtung,
- Fig. 4: eine grafische Darstellung des zeitlichen Verlaufs der Eingangstemperatur der Druckluft vor der Ölreinigung.

In den Zeichnungsfiguren und der nachfolgenden Beschreibung sind für jeweils gleiche Bauteile und Einrichtungen die gleichen Bezugszahlen verwendet.

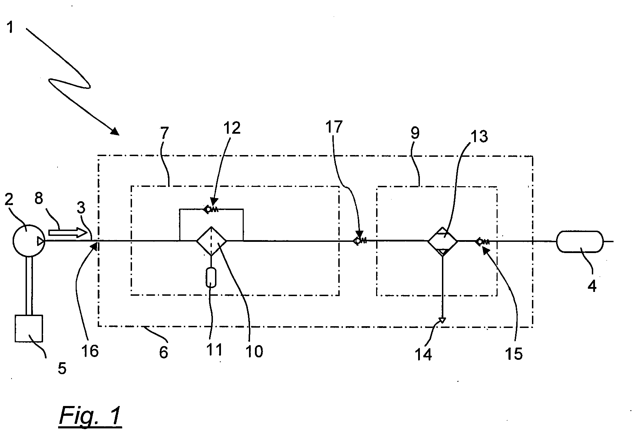

Fig. 1 zeigt eine Druckluftversorgungseinrichtung 1 für ein Kraftfahrzeug, welche einen Kompressor 2 umfasst, der Umgebungsluft ansaugt, verdichtet und über eine Druckleitung 3 mit einem Speicherbehälter 4 verbunden ist. An den Speicherbehälter 4 sind hier nicht dargestellte Aggregate eines Kraftfahrzeuges angeschlossen und werden von dort als Verbraucher mit Druckluft versorgt. Der Kompressor 2 wird von einem Motor 5 angetrieben, welcher bspw. der Antriebsmotor des Kraftfahrzeuges sein kann.

In der Druckleitung 3 ist eine Einrichtung 6 zur Aufbereitung der Druckluft vorgesehen, welche eine Filtereinheit 7 und eine in Durchströmungsrichtung 8 der Druckleitung 3 hinter der Filtereinheit 7 liegende Trocknungseinheit 9 aufweist. Die Filtereinheit 7 umfasst einen in der Druckleitung 3 angeordneten Koaleszenzfilter 10 zum Auffangen von Verunreinigungen, insbesondere Ölprodukten. Dem Filter 10 ist dabei ein Behälter 11 zum Auffangen des ausgefilterten Öls zugeordnet. Der Koaleszenzfilter 10 sammelt Aerosole und auch in flüssiger Form vorliegende Ölprodukte. Flüssige Ölprodukte gelangen entweder direkt aus dem ölgeschmierten Kompressor in die Druckluft oder kondensieren an der Wand der Druckleitung. Die Druckleitung 3 ist mit einer Umgehungsleitung (Bypass) für den Koaleszenzfilter 10 ausgestattet und in diesem Bypass ist ein Rückschlagventil 12 angeordnet. Das Rückschlagventil 12 öffnet in an sich bekannter Weise bei Erreichen des Ansprechdrucks den Bypass, so dass das Druckniveau am Koaleszenzfilter 10 abgesenkt wird.

In der Trocknungseinheit 9 wird die bereits von Öl-Aerosolen gereinigte Druckluft getrocknet. Die Trocknungseinheit 9 weist im gezeigten Ausführungsbeispiel einen in der Druckleitung 3 angeordneten Lufttrockner 13 mit Entwässerungsventil auf, wobei die kondensierte und abgeschiedene Wasserfracht der Druckluft über einen Auslass 14 abgeführt wird. Innerhalb der Trocknungseinheit 9 ist zwischen dem Lufttrockner 13 und dem Speicherbehälter 4 ein Rückschlagventil 15 in der Druckleitung 3 vorgesehen, welches den Arbeitsdruck in dem Speicherbehälter 4 aufrechterhält.

Die Druckleitung 3 ist in ihrem Abschnitt zwischen Kompressor 2 und Filtereinheit 7 derartig konfiguriert, dass die Druckluft am Eingang 16 der Druckluftaufbereitungseinrichtung 6 auf eine derartige Temperatur gebracht wird, dass die Ölfracht der Druckluft kondensiert und die in der Druckluft außerdem enthaltene Wassermasse als Dampf gelöst ist. Auf diese Weise werden in der Filtereinheit 7 die Ölprodukte der Druckluft ausgefiltert, während der durchströmende Wasserdampf anschließend in der Trocknungseinheit 9 aus der Druckluft entfernt wird. Die Temperatur der Druckluft in der Druckleitung 3 ist gegenüber der Umgebungstemperatur höher aufgrund der Verdichtung im Kompressor 2. Die Einstellung des erfindungsgemäßen Temperaturniveaus, das zur Kondensation allein der Öl-Aerosole führt, kann unter Berücksichtigung der Kompressor-Charakteristik und der Verdichtung durch die Gestaltung der Druckleitung 3 erfolgen. Hierzu wird die Leitungslänge, der Leitungsquerschnitts, der Wärmeleitfähigkeit und -kapazität der Druckleitung entsprechend gewählt und ihr Verlauf bei der Verlegung im Fahrzeug so gewählt, dass die Druckleitung die gewünschte Temperatur der Druckluft erzeugt. Das Rückschlagventil 12 in der Filtereinheit 7 begrenzt den Druck am Eingang 16 der Druckluftaufbereitungseinrichtung 6 und trägt dazu bei, dass auch bei Verstopfung des Filters eine weitere Versorgung der Verbraucher mit Druckluft gewährleistet ist. Bei Verstopfung steigt der Druck am Eingang 16 an. Wird ein vorbestimmter Druckwert erreicht, öffnet das Rückschlagventil 12 und gibt den Bypass frei.

Um eine effektive Wasserabscheidung in der Trocknungseinheit 9 zu erreichen, ist in der Druckleitung 3 zwischen der Filtereinheit 7 und der Trocknungseinheit 9 eine - nicht dargestellte - Kühlung vorgesehen, so dass die Kondensation des Wasserdampfes in diesem Leitungsabschnitt vor dem Eintritt in die Trocknungseinheit 9 gefördert wird.

Der Koaleszenzfilter 10 kann als Kartusche ausgebildet sein, so dass ein leicht austauschbares Bauteil gegeben ist. Die Filterkartusche kann dabei Bestandteil einer kompakt gebauten und auch den Lufttrockner sowie den Speicherbehälter 4 umfassenden Luftaufbereitungseinheit bzw. Air Processing Unit (APU) sein.

In der Druckleitung 3 ist zwischen Filtereinheit 7 und Trocknungseinheit 9 ein Absperrventil 17 angeordnet, welches dazu dient, den Abschnitt vom Kompressor bis zum Absperrventil 17 unter Druck zu halten, wenn der Lufttrockner 13 zur Regeneration des Trockenmittels entlüftet wird.

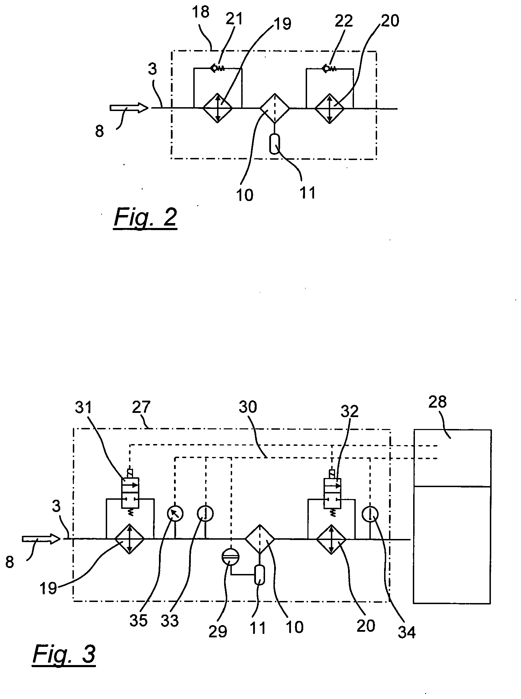

Fig. 2 zeigt eine alternative Ausgestaltung der Filtereinheit 18, welche in der in Figur 1 gezeigten Darstellung anstelle der dort angeordneten Filtereinheit 7 eingesetzt werden kann. Bei der Filtereinheit 18 gemäß Figur 2 ist in Durchströmungsrichtung 8 der Druckleitung 3 vor und hinter dem Koaleszenzfilter 10 jeweils ein Kühler 19 bzw. 20 angeordnet, welche die Temperatur der sie durchströmenden Druckluft senken. Jedem der Kühler 19, 20 ist je ein Bypass der Druckleitung 3 zugeordnet, die jeweils durch ein Rückschlagventil 21 bzw. 22 gesichert sind. Die Rückschlagventile 21, 22 öffnen in Durchströmungsrichtung 8, wenn der jeweilige Kühler 19, 20, z.B. durch Vereisung, verstopft sein sollte. Der in Durchströmungsrichtung 8 vor dem Koaleszenzfilter 10 liegende Kühler 19 senkt die vom Kompressor verdichtete und damit gleichzeitig erwärmte Druckluft auf das erfindungsgemäße Temperaturniveau ab, bei dem Ölprodukte in der Druckluft kondensieren, jedoch der Wasserdampf aufgrund des noch ausreichend hohen Temperaturniveaus gelöst bleibt. Der in Durchströmungsrichtung 8 hinter dem Koaleszenzfilter 10 angeordnete Kühler 20 senkt das Temperaturniveau der von Ölprodukten befreiten Druckluft weiter ab, so dass der Wasserdampf nach der Ölfiltration rasch kondensiert und die Trocknung sehr effektiv erfolgt. Die Absenkung beträgt beispielsweise 25 K. Vor Eintritt in den hier nicht dargestellten, der Filtereinheit 18 nachgeordneten Trocknungseinheit 9 (Fig.1) führt die Druckluft nur noch Feuchtigkeit, welche in der Trocknungseinheit 9 abgetrennt wird, so dass die Trocknungseinheit vor schädigenden Ölprodukten geschützt ist.

Die vom Koaleszenzfilter 10 ausgefilterten Ölprodukte werden in dem Speicherbehälter 11 aufgefangen und können so auf einfache Weise turnusmäßig entsorgt werden. Das Auffangen der Ölprodukte erlaubt bei Druckversorgungseinrichtungen in Kraftfahrzeugen zum einen den Einsatz auch von solchen Kompressoren, die bei ihrem Verdichtungsprozess Ölprodukte und Ölzerfallsprodukte in die Druckluft geben. Diese Produkte können nämlich durch die erfindungsgemäße Ölfiltration vollständig aufgefangen werden und so einem Entweichen in die Umwelt konsequent entgegen gewirkt werden. Zum anderen trägt das vollständige Auffangen der Ölprodukte und die Verhinderung eines Entweichens in die Umwelt bereits jetzt den möglichen gesetzlichen Beschränkungen der gesamten Schadstoffemission eines Fahrzeugs und nicht nur dessen Abgasemission Rechnung.

Fig. 3 zeigt eine Filtereinheit 27 zur Druckluftaufbereitung für eine elektronisch steuerbare Druckluftversorgungseinrichtung. Der Druckluftversorgungseinrichtung ist eine elektronische Steuereinheit 28 zugeordnet, welche die Aufbereitung der Druckluft in der Druckleitung 3 steuert. Die Filtereinheit 27 wird in der in Fig. 1 gezeigten und entsprechend beschriebenen Weise zwischen dem Kompressor und der Trocknungseinheit in der Druckleitung 3 angeordnet. Die Filtereinheit 27 umfasst einen Koaleszenzfilter 10, dem in der bereits beschriebenen Weise ein Auffangbehälter 11 zum Auffangen der abgeschiedenen Ölprodukte zugeordnet ist. Der Füllstand des Auffangbehälters 11 wird von einem Flüssigkeitsniveaumesser 29 erfasst. Der Flüssigkeitsniveaumesser 29 ist im gezeigten Ausführungsbeispiel mit der elektronischen Steuereinheit 28 über eine Signalleitung 30 verbunden, so dass die Steuereinheit 28 den Füllstand des Speicherbehälters erfassen kann und bei Bedarf eine Anzeige zum Entleeren des Behälters 11 liefert.

In Durchströmungsrichtung 8 der Druckleitung 3 sind jeweils vor und hinter dem Koaleszenzfilter 10 Kühler 19, 20 angeordnet. Beiden Kühlern 19, 20 ist ähnlich der Ausgestaltung gemäß Fig. 2 eine Bypass-Leitung der Druckleitung 3 zugeordnet. In den Bypass-Leitungen ist jeweils ein Steuerventil 31, 32 angeordnet, welche über Signalleitungen 30 von der Steuereinheit 28 angesteuert werden. Die Steuerventile 31, 32 sind im gezeigten Ausführungsbeispiel als 2/2-Wegeventile ausgeführt, so dass die Steuereinheit 28 in Abhängigkeit des Schaltzustandes der Steuerventile 31, 32 die Druckluft bedarfsweise durch den jeweiligen Kühler 19, 20 oder unter Umgehung der Kühler durch die jeweiligen Bypass-Leitungen leiten kann. Alternativ können anstelle der fremdangesteuerten Steuerventile 31, 32 zum Beispiel temperaturabhängig selbsttätig schaltende Ventile verwendet werden.

Das in Durchströmungsrichtung 8 vorne liegende Steuerventil 31 dient der Steuereinheit 28 als Stellglied einer Steuerung der Drucklufttemperatur vor dem Koaleszenzfilter 10. Um die erfindungsgemäße Temperatur der Druckluft einzustellen, bei der am Eingang des Koaleszenzfilters 10 eine Temperatur herrscht, bei der die Ölprodukte kondensiert sind, jedoch der Wasserdampf im Luftstrom gelöst bleibt, wird mittels eines Temperatursensors 33 die Eintrittstemperatur vor dem Filter 6 als Steuergröße gemessen und durch Ein- und Ausschalten der Kühlung auf den vorgegebenen Sollwert gebracht. Die Einschaltung der Kühlung erfolgt im vorliegenden Ausführungsbeispiel durch Schließen des Steuerventils 31, so dass die zu reinigende Druckluft durch den arbeitenden Kühler 19 gezwungen wird. Zum Ausschalten der Kühlung wird entsprechend das Steuerventil 31 von der Steuereinheit 28 durchgängig geschaltet. Alternativ zur Steuerung kann auch eine Regelung der Eintrittstemperatur des Koaleszenzfilters 10 vorgesehen sein.

In entsprechender Weise wird der stromabwärts des Filters 10 liegende Kühler 20 von der Steuereinheit 28 eingesetzt, welche zur Einsteuerung einer vorgegebenen Austrittstemperatur der Filtereinheit 27 die Austrittstemperatur des zweiten Kühlers 20 mittels eines stromabwärts des Kühlers 20 angeordneten Temperaturfühlers 34 erfasst. Durch entsprechende Ansteuerung zum Öffnen/Schließen des Steuerventils 32 des zweiten Kühlers 20 wird die gewünschte Austrittstemperatur eingesteuert, bei der eine effektive Trocknung der Druckluft erreicht wird.

Im Bereich des Lufteintritts des Filters 10, also zwischen dem Zwischenkühler 19 und dem Filter 10 ist außer dem Temperaturmessfühler 33 ein Drucksensor 35 vorgesehen. Das Messsignal des Drucksensors 35 wird der Steuereinheit 28 zugeführt. Die mit dem Signal des Drucksensors 35 mögliche Erfassung des entstehenden Staudrucks vor dem Filter 10 kann als Kontrolle der ordnungsgemäßen Funktion der Ölfilterung oder auch zur Festlegung des Filterwechselintervalls herangezogen werden. Alternativ wird der Drucksensor 35 oder ein weiterer Drucksensor vor dem Zwischenkühler 19 angeordnet.

Die Filtereinheit 27 ist mit einer Trocknungseinheit 9 (Fig.1) in einer kompakten Einheit zusammengefasst, die von der Steuereinheit 28 gesteuert wird. Man spricht daher von einer elektronisch gesteuerten Luftaufbereitungsanlage (E-APU). Eine solche Luftaufbereitungsanlage kann auch weitere Komponenten, wie zum Beispiel ein Schutzventil zur Absicherung der verschiedenen Druckluftkreise, umfassen.

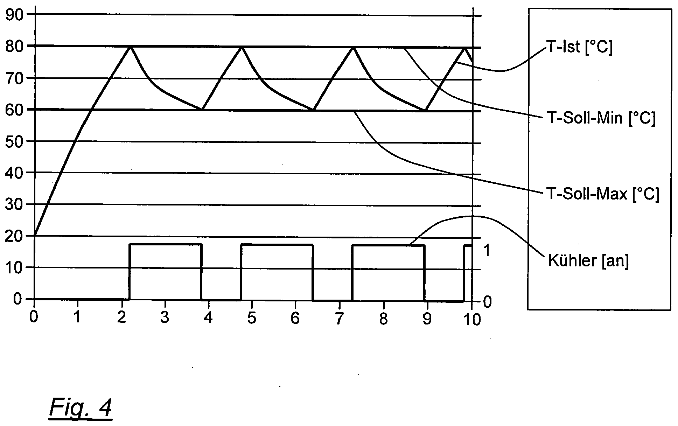

Fig. 4 zeigt anhand einer grafischen Darstellung des Verlaufs der Temperatur der Druckluft vor dem Ölfilter die Funktionsweise der Steuerung der Aufbereitung der Druckluft über die Temperatur der Druckluft. Dieser grafische Temperaturverlauf ist mit T-Ist bezeichnet. Zusätzlich zu der Temperaturkurve enthält das Schaubild nach Fig. 4 eine grafische Darstellung des Schaltzustandes der Kühlung. Die Kühlung wird in der zu Fig. 3 beschriebenen Weise von der Steuereinheit eingeschaltet und ausgeschaltet, so dass sich der in Fig. 4 dargestellte rechteckige Kurvenverlauf der Kühlerfunktion ergibt. Die auf der X-Achse liegenden Abschnitte der Kühlerkurve entsprechen dabei dem ausgeschalteten Zustand. Die zwischen den Zeitabschnitten mit abgeschalteter Kühlung verlaufenden Abschnitte der Kühlerkurve entsprechen dem Schaltzustand Kühler (an). In diesen Zeitabschnitten mit eingeschalteter Kühlung sinkt die Temperatur T-Ist der Druckluft vor dem Ölfilter und wird innerhalb des Temperaturfensters gehalten, in dem die Ölprodukte kondensieren. Um die Temperatur der Druckluft in einem Intervall zu erhalten, in dem die Ölprodukte kondensieren, jedoch der Wasserdampf im Luftstrom gelöst bleibt, werden der Steuerung die Randwerte dieses Temperaturintervalls vorgegeben. Erreicht die Temperatur T-Ist der Druckluft bei eingeschalteter Kühlung den unteren Randwert T-Soll-Min, so schaltet die Steuereinheit das Steuerventil 31 (Fig. 3) in die durchgängige Stellung, so dass die Kühlung ausgeschaltet wird und die Temperatur T-Ist steigt. Bei Erreichen des Maximalwerts T-Soll-Max wird das Steuerventil 31 wieder geschlossen, so dass die Druckluft durch den Kühler 19 fließt und wieder gekühlt wird.

In vergleichbarer Weise wie in Fig.4 dargestellt kann auch eine Steuerung des zweiten Kühlers 20 hinter dem Koaleszenzfilter 10 erfolgen. Dabei wird eine niedrigere Solltemperatur vorgegeben und durch Ein- und Ausschalten der Kühlung im gleichfalls vorgegebenen Temperaturfenster gehalten.

Sämtliche in der Figurenbeschreibung, in den Ansprüchen und in der Beschreibungseinleitung genannten Merkmale sind sowohl einzeln als auch in beliebiger Weise miteinander kombiniert einsetzbar. Die Erfindung ist daher nicht auf die beschriebenen bzw. beanspruchten Merkmalskombinationen beschränkt. Vielmehr sind alle Merkmalskombinationen als offenbart zu betrachten.

## Patentansprüche

1. Verfahren zur Aufbereitung von Druckluft für einen oder mehrere pneumatische Verbraucher in einem Kraftfahrzeug, wobei die Druckluft in einer Druckleitung (3) zunächst von Verunreinigungen, wie Kohlenwasserstoffverbindungen und Ölprodukten, gereinigt und anschließend getrocknet wird, **dadurch gekennzeichnet, dass** die Druckluft vor der Reinigung von Verunreinigungen auf eine derartige Temperatur (T-Ist) gebracht wird, dass die gasförmig vorhandenen Verunreinigungen kondensieren und die in der Druckluft enthaltene Wassermasse als Dampf gelöst ist, wobei die Druckluft vor der Reinigung gekühlt wird.

2. Verfahren nach Anspruch 1, **dadurch gekennzeichnet, dass** die Temperatur (T-Ist) der Druckluft vor der Reinigung gesteuert oder geregelt wird.

3. Verfahren nach Anspruch 2, **dadurch gekennzeichnet, dass** die Temperatur (T-Ist) der Druckluft vor der Reinigung über die Ein- und Ausschaltung eines Kühlers (19) der Druckluft gesteuert oder geregelt wird.

4. Verfahren nach einem der vorhergehenden Ansprüche, **dadurch gekennzeichnet, dass** die Druckluft nach der Reinigung und vor dem Trocknen gekühlt wird.

5. Einrichtung zur Aufbereitung von Druckluft in einem Kraftfahrzeug mit einer Druckluft führenden Druckleitung (3), in der in Durchströmungsrichtung (8) nacheinander eine Einrichtung (7, 18, 27) zum Entfernen von Verunreinigungen, wie Kohlenwasserstoffverbindungen und Ölprodukten, und eine Trocknungseinheit (13) angeordnet sind, **dadurch gekennzeichnet, dass** die Druckleitung (3) in ihrem in Durchströmungsrichtung (8) vor der Einrichtung (7, 18, 27) zum Entfernen von Verunreinigungen liegenden Abschnitt derart ausgebildet ist, dass die gasförmig vorhandenen Verunreinigungen kondensieren und die in der Druckluft enthaltene Wassermasse als Dampf gelöst ist, was dadurch erreicht wird, dass in der Druckleitung (3) in ihrem in Durchströmungsrichtung (8) vor der Einrichtung (7, 18, 27) zum Entfernen von Verunreinigungen liegenden Abschnitt eine auf die Temperatur (T-Ist) der Druckluft einwirkende Einheit (19) angeordnet ist, wobei die auf die Temperatur der Druckluft (T-Ist) einwirkende Einheit ein Kühler (19) ist, wobei eine mit dem Kühler zusammen wirkende Regel- oder Steuereinheit für die Temperatur (T-ist) der Druckluft vorgesehen ist.

6. Druckluftaufbereitungseinrichtung nach Anspruch 5, **dadurch gekennzeichnet, dass** die Einrichtung zum Entfernen von Verunreinigungen eine Filtereinheit umfasst und dass in der Druckleitung (3) zwischen Filtereinheit (7) und Trocknungseinheit (9) ein Absperrventil (17) angeordnet ist.

7. Druckluftaufbereitungseinrichtung nach einem der Ansprüche 5 und 6, **dadurch gekennzeichnet, dass** die Einrichtung (7, 18, 27) zum Entfernen von Verunreinigungen einen Koaleszenzfilter (10) umfasst.

8. Druckluftaufbereitungseinrichtung nach einem der Ansprüche 5 bis 7, **dadurch gekennzeichnet, dass** die Einrichtung (7, 18, 27) zum Entfernen von Verunreinigungen als Kartusche ausgebildet ist.

9. Drucktuftaufbereitungseinrichtung nach einem der Ansprüche 5 bis 8, **dadurch gekennzeichnet, dass** die Einrichtung (7, 18, 27) zum Entfernen von Verunreinigungen und die Trocknungseinheit (13) eine bauliche Einheit bilden.

10. Kraftfahrzeug mit einer Druckluftaufbereitungseinrichtung gemäß einem der Ansprüche 5 bis 9, welche mit einem Verfahren gemäß einem der Ansprüche 1 bis 4 betreibbar ist.

## Claims

1. Method for the processing of compressed air for one or more pneumatic consumers in a motor vehicle, wherein the compressed air in a pressure line (3) is firstly purified of contaminants, such as hydrocarbon compounds and oil products, and subsequently dried, **characterized in that** the compressed air, before the purification for the removal of contaminants, is brought to a temperature (T-Act) which is such that the contaminants present in gaseous form condense and the water mass contained in the compressed air is dissolved as steam, wherein the compressed air is cooled before the purification.

2. Method according to Claim 1, **characterized in that** the temperature (T-Act) of the compressed air is controlled or regulated before the purification.

3. Method according to Claim 2, **characterized in that** the temperature (T-Act) of the compressed air before the purification is controlled or regulated by virtue of a cooler (19) for the compressed air being activated and deactivated.

4. Method according to one of the preceding claims, **characterized in that** the compressed air is cooled after the purification and before the drying.

5. Device for the processing of compressed air in a motor vehicle, having a pressure line (3) which conducts compressed air and in which a device (7, 18, 27) for removing contaminants, such as hydrocarbon compounds and oil products, and a drying unit (13) are arranged in series in a throughflow direction (8), **characterized in that** the pressure line (3), in its portion situated upstream of the device (7, 18, 27) for removing contaminants with respect to the throughflow direction (8), is designed such that the contaminants present in gaseous form condense and the water mass contained in the compressed air is dissolved as steam, which is achieved **in that** a unit (19) which influences the temperature (T-Act) of the compressed air is arranged in the pressure line (3), **in that** portion thereof which is situated upstream of the device (7, 18, 27) for removing contaminants with respect to the throughflow direction (8), wherein the unit which influences the temperature of the compressed air (T-Act) is a cooler (19), wherein a regulating or control unit for the temperature (T-Act) of the compressed air is provided, which regulating or control unit interacts with the cooler.

6. Compressed air processing device according to Claim 5, **characterized in that** the device for removing contaminants comprises a filter unit and **in that** a shut-off valve (17) is arranged in the pressure line (3) between the filter unit (7) and drying unit (9).

7. Compressed air processing device according to one of Claims 5 and 6, **characterized in that** the device (7, 18, 27) for removing contaminants comprises a coalescence filter (10).

8. Compressed air processing device according to one of Claims 5 to 7, **characterized in that** the device (7, 18, 27) for removing contaminants is designed as a cartridge.

9. Compressed air processing device according to one of Claims 5 to 8, **characterized in that** the device (7, 18, 27) for removing contaminants and the drying unit (13) form a structural unit.

10. Motor vehicle having a compressed air processing device according to one of Claims 5 to 9, which compressed air processing device can be operated using a method according to one of Claims 1 to 4.

## Revendications

1. Procédé de préparation d'air comprimé pour un ou plusieurs consommateurs pneumatiques d'un véhicule automobile, dans lequel, dans un conduit (3) sous pression, l'air comprimé est d'abord épuré de ses encrassements, par exemple des composés d'hydrocarbure et des produits huileux, et ensuite séché,
**caractérisé en ce que**
avant l'épuration des impuretés, l'air comprimé est amené à une température (T-Ist) telle que les impuretés présentes sous forme gazeuse se condensent et que la quantité d'eau présente dans l'air comprimé soit dispersée sous forme de vapeur, l'air comprimé étant refroidi avant son épuration.

2. Procédé selon la revendication 1, **caractérisé en ce qu'**avant le nettoyage, la température (T-Ist) de l'air comprimé est commandée ou régulée.

3. Procédé selon la revendication 2, **caractérisé en ce qu'**avant le nettoyage, la température (T-Ist) de l'air comprimé est commandée ou régulée par l'intermédiaire du branchement et du débranchement d'un refroidisseur (19) d'air comprimé.

4. Procédé selon l'une des revendications précédentes, **caractérisé en ce que** l'air comprimé est refroidi après le nettoyage et avant le séchage.

5. Dispositif de préparation d'air comprimé dans un véhicule automobile, présentant un conduit (3) sous pression qui conduit l'air comprimé et dans lequel un dispositif (7, 18, 27) d'élimination des impuretés, par exemple de composés d'hydrocarbure et des produits huileux, et une unité de séchage (13) sont disposés à l suite l'un de l'autre dans la direction d'écoulement (8),
**caractérisé en ce que**
dans sa section située dans la direction d'écoulement (8) en avant du dispositif (7, 18, 27) d'élimination des impuretés, le conduit (3) sous pression est configuré de telle sorte que les impuretés présentes sous forme gazeuse se condensent et que la quantité d'eau que contient l'air comprimé soit dispersée sous forme de vapeur, ce qui est obtenu en disposant dans la section du conduit (3) sous pression située en amont du dispositif (7, 18, 27) d'élimination des impuretés dans la direction d'écoulement (8) une unité (19) qui agit sur la température (T-Ist) de l'air comprimé, l'unité agissant sur la température (T-Ist) de l'air comprimé étant un refroidisseur (19), une unité de régulation ou de commande de la température (T-Ist) de l'air comprimé coopérant avec le refroidisseur étant prévue.

6. Dispositif de préparation d'air comprimé selon la revendication 5, **caractérisé en ce que** le dispositif d'élimination des impuretés comporte une unité de filtre et **en ce qu'**une soupape de blocage (17) est disposée dans le conduit (3) sous pression entre l'unité de filtre (7) et l'unité de séchage (9).

7. Dispositif de préparation d'air comprimé selon l'une des revendications 5 et 6, **caractérisé en ce que** le dispositif (7, 18, 27) d'élimination des impuretés comporte un filtre (10) à coalescence.

8. Dispositif de préparation d'air comprimé selon l'une des revendications 5 à 7, **caractérisé en ce que** le dispositif (7, 18, 27) d'élimination des impuretés est configuré sous la forme d'une cartouche.

9. Dispositif de préparation d'air comprimé selon l'une des revendications 5 à 8, **caractérisé en ce que** le dispositif (7, 18, 27) d'élimination des impuretés et l'unité de séchage (13) forment une entité.

10. Véhicule automobile doté d'un dispositif de préparation d'air comprimé selon l'une des revendications 5 à 9 dans lequel un procédé selon l'une des revendications 1 à 4 peut être mis en oeuvre.
